# EUROPÄISCHE PATENTSCHRIFT

(11) **EP 3 374 798 B1**
(45) Veröffentlichungstag und Bekanntmachung des Hinweises auf die Patenterteilung: **11.01.2023**
(21) Anmeldenummer: 16810238.2
(22) Anmeldetag: 10.11.2016
(51) Int. Cl.: G01S 19/21, G01S 19/42, G01S 19/36, G01S 19/33, G01S 19/20

(54) **SYSTEM ZUM PLAUSIBILISIEREN VON SATELLITENSIGNALEN GLOBALER NAVIGATIONSSYSTEME**
SYSTEM FOR PLAUSIBILIZING SATELLITE SIGNALS OF GLOBAL NAVIGATION SYSTEMS
SYSTÈME DE CONTRÔLE DE LA PLAUSIBILITÉ DES SIGNAUX SATELLITES DE SYSTÈMES MONDIAUX DE NAVIGATION

(30) Priorität: 12.11.2015 DE 102015222355; 10.02.2016 DE 102016201980
(43) Veröffentlichungstag der Anmeldung: 19.09.2018
(73) Patentinhaber: Continental Automotive Technologies GmbH, 30165 Hannover (DE)
(72) Erfinder: ANTONI, Henrik, 63579 Freigericht (DE); BLÜHER, Pierre, 65795 Hattersheim (DE); STÄHLIN, Ulrich, 65760 Eschborn (DE); ZALEWSKI, Michael, 60438 Frankfurt am Main (DE)
(74) Vertreter: Continental Corporation
(86) Internationale Anmeldenummer: PCT/DE2016/200514
(87) Internationale Veröffentlichungsnummer: WO 2017/080555

(56) Entgegenhaltungen:
- CN-U- 203 191 557
- FR-A1- 3 020 469
- US-A1- 2005 146 459
- US-A1- 2014 097 984
- US-A1- 2014 368 379

## Beschreibung

Die Erfindung betrifft ein System zum Empfangen und Verarbeiten von Satellitensignalen von Satelliten globaler Navigationssysteme gemäß dem Oberbegriff des Anspruchs 1 sowie ein Verfahren zum Ermitteln einer plausibilisierten Eigenposition mittels eines vorgenannten Systems gemäß Oberbegriff des Anspruchs 9.

Die FR 3 020 469 A1 betrifft eine Integritätskontrolle für ein Navigationssystem, bei der mittels Empfänger Satellitendaten von unterschiedlichen GNSS-Systemen empfangen und verarbeitet werden.

Auch die US 2014/368379 A1 betrifft ein Verfahren und eine Vorrichtung zum Empfangen und Verarbeiten von Signalen, die von unterschiedlichen Satellitensystemen unterschiedlicher Betreiber (GPS, Galileo, Glonass etc.) stammen und nach ihrer Digitalisierung nach deren Konstellationszugehörigkeit getrennt werden.

Mit Zunahme des Automatisierungsgrades von Fahrerassistenzsystemen in Fahrzeugen nimmt die Bedeutung von präzisen und verifizierten Positionsangaben des Fahrzeugs zu. Viele Fahrerassistenzsysteme funktionieren nur dann ordnungsgemäß, wenn die ermittelten Positionsdaten des Fahrzeugs präzise und korrekt sind. Beispielsweise muss ein Fahrerassistenzsystem, das vor einer Kollision an einer Kreuzung warnt, genau wissen, wo sich die jeweiligen Fahrzeuge befinden, die auf die Kreuzung zufahren. Eine falsch ermittelte Position der jeweiligen Fahrzeuge könnte dazu führen, dass entweder eine falsche Warnung oder eine Warnung zu spät ausgegeben wird. Darüber hinaus gibt es Fahrerassistenzsysteme, die eigenständig und voll automatisiert Fahrmanöver durchführen. Je nach Fahrsituation können solche Fahrmanöver in sicherheitskritischen Situationen ablaufen, in denen eine genaue und korrekte Ermittlung der Eigenposition des Fahrzeugs absolut notwendig ist.

Vor diesem Hintergrund ist es daher Aufgabe der Erfindung, ein System oder ein Verfahren aufzuzeigen, mit dem die Ermittlung der Eigenposition des Fahrzeugs vor Fehlern und Störeinflüssen sicherer gemacht werden kann.

Die Aufgabe wird gelöst gemäß einem ersten Aspekt der Erfindung mittels eines Systems gemäß Anspruch 1. Weitere vorteilhafte Ausführungsformen sind Gegenstand der Unteransprüche, die ausdrücklich durch Bezugnahmen zum Gegenstand der Beschreibung gemacht werden.

Der Erfindung liegt der Grundgedanke zugrunde, dass Satellitensignale globaler Navigationssysteme zu einer Position Informationen enthalten, die es erlauben, die Position auf zweierlei Weise zu ermitteln. Das System macht sich diesen Umstand zunutze und baut zwei voneinander unabhängige Signalpfade auf, um somit eine Redundanz der Positionsermittlung zu erreichen. Auf dieser Basis können dann unterschiedliche Auswertungen vorgenommen werden, um die Sicherheit und Genauigkeit der Positionsermittlung zu erhöhen. Diese werden hiernach in Zusammenhang mit den vorteilhaften Ausführungsformen näher beschrieben.

Im Rahmen dieser Erfindung sollen unter unabhängigen Satellitensignalen zu einer Position Satellitensignale verstanden werden, die einen Rückschluss auf die gleiche Position oder im Wesentlichen gleiche Position zulassen, die aber voneinander losgelöst und unabhängig auswertbar sind. Es handelt sich somit um eine Unabhängigkeit des Informationsgehalts der Satellitensignale. Die Satellitensignale können sehr wohl zum gleichen Zeitpunkt von einem Satelliten abgeschickt worden sein. Die Satellitensignale sind durch den Bezug zur gleichen oder im Wesentlichen gleichen Position zueinander bezogen oder miteinander verknüpft.

Unter einer Analyseeinheit soll im Rahmen dieser Erfindung eine Einheit verstanden werden, die anhand der aufbereiteten Signale eine Korrelation zwischen den Satellitensignalen und den jeweiligen Satelliten herstellen kann. Die Analyseeinheit könnte daher auch als Korrelationseinheit bezeichnet werden. Die Analyseeinheit führt eine Analyse der aufbereiteten Satellitensignale durch und ermöglicht auf diese Weise eine Zuordnung der Satellitensignale zu den jeweiligen Satelliten und zu den jeweiligen Positionen.

Das erfindungsgemäße System ist dadurch weitergebildet, dass die Analyseeinheit derart ausgebildet ist, um die Satellitensignale anhand einer oder mehrerer Signaleigenschaften voneinander zu trennen und den Positionsermittlungseinheiten diejenigen Satellitensignale bereitzustellen, die von dem Satellitensignal für die andere Positionsermittlungseinheit unabhängig sind. Auf diese Weise wird erreicht, dass die Positionsermittlungseinheiten voneinander unabhängige Satellitensignale erhalten, die jedoch dazu geeignet sind, die gleiche Position zu ermitteln. Sollte eines der Satellitensignale einen Fehler aufweisen oder eine verfälscht worden sein, so würde es zwangsläufig zu einer Abweichung zwischen den ermittelten Positionen der Positionsermittlungseinheiten kommen. Unter Trennung kann im Rahmen dieser Erfindung auch eine Filterung oder eine Aussortierung oder eine Auswahl von richtigen Satellitensignalen verstanden werden. Auf diese Weise können Störeinflüsse wie Multipath oder mögliche Verfälscher wie Jammer oder Spoofer schnell erkannt werden. Wichtig ist es, dass solche Eigenpositionen nicht innerhalb eines Fahrzeugs weiterverwertet werden.

Das erfindungsgemäße System ist dadurch weitergebildet, dass die Analyseeinheit derart ausgebildet ist, um eine Trennung der Satellitensignale nach den Frequenzen der Satellitensignale eines Satelliten durchzuführen. Auf diese Weise macht sich das System den Umstand zunutze, dass ein Satellit eines Satellitennavigationssystemtyps, beispielsweise GPS-Satelliten, zu einer Position die Satellitensignale auf mehreren Frequenzen senden. Diese können mittels des erfindungsgemäßen Systems unabhängig voneinander ausgewertet werden. Die Analyse führt eine Trennung dieser Satellitensignale durch und führt den Positionsermitttlungseinheiten die jeweiligen Satellitensignale zu.

Das erfindungsgemäße System ist dadurch weitergebildet, dass es eine Lokalisationseinheit zum Aufnehmen der mittels der Positionsermittlungseinheit ermittelten Eigenpositionen und zum Ermitteln von plausibilisierten Eigenpositionen aufweist. In der Lokalisationseinheit werden die von den Positionsermittlungseinheiten ermittelten Eigenpositionen zusammengeführt und ausgewertet. Da die Positionsermittlungseinheiten voneinander unabhängig die Positionsdaten zu einer Position ermitteln, können auf diese Weise Abweichungen und Fehler schnell erkannt und gegebenenfalls korrigiert werden.

Das erfindungsgemäße System ist dadurch weitergebildet, dass die Lokalisationseinheit derart ausgebildet ist, um die ermittelten Messwerte der Positionsermittlungseinheiten miteinander zu vergleichen und Abweichungen zwischen den Eigenpositionen zu ermitteln.

Das erfindungsgemäße System wird in besonders bevorzugter Weise dadurch weitergebildet, dass die Lokalisationseinheit derart ausgebildet ist, um die ermittelten Eigenpositionen der Positionsermittlungseinheiten miteinander zu vergleichen und beim Überschreiten der Abweichung über eine Schwellenwert eine Korrektur der Eigenposition durchzuführen oder die ermittelte Eigenposition zu verwerfen und gegebenenfalls durch Daten zur Eigenposition von anderen Quellen zu ersetzen. Auf diese Weise wird sichergestellt, dass die ermittelten Eigenpositionen plausibel zueinander sind. Sollte die Abweichung zwischen den Eigenpositionen einen Schwellenwert überschreiten, so ist davon auszugehen, dass einer der Signalpfade oder beide Signalpfade einem Fehler unterliegen und diese Eigenpositionen nicht uneingeschränkt verwendet werden dürfen. Je nachdem, ob in einer Fahrsituation eine Eigenposition benötigt wird und das Fehlen einer Eigenposition einen sicherheitskritischen Zustand hervorrufen könnte, können weitere alternative Schritte eingeleitet werden.

Das erfindungsgemäße System wird in vorteilhafter Weise dadurch weitergebildet, dass der Schwellenwert in einem Bereich von 3 m bis 5 m liegt, bevorzugter Weise 4 m beträgt, besonders bevorzugt 4,10 m beträgt. Diese Bereiche haben sich für die Anwendung in Fahrerassistenzsystemen als besonders sinnvoll und angemessen ergeben, um sicherzustellen, dass das erfindungsgemäße System stabil arbeitet.

Das erfindungsgemäße System wird in vorteilhafter Weise dadurch weitergebildet, dass die Lokalisationseinheit derart ausgebildet ist, um die von der Signalaufbereitungseinheit aufbereiteten Satellitensignale des ersten Signalpfades mit denen des zweiten Signalpfades zu vergleichen. Auf diese Weise können durch einen Vergleich, gegebenenfalls anhand von bestimmten Kriterien oder Eigenschaften der Satellitensignale, Fehler in den Satellitensignalen frühzeitig erkannt werden.

Das erfindungsgemäße System wird in vorteilhafter Weise dadurch weitergebildet, dass die Lokalisationseinheit derart ausgebildet ist, um die von der Analyseeinheit aufbereiteten Satellitensignale des ersten Signalpfades mit denen des zweiten Signalpfades zu vergleichen. Diese Ausführungsform stellt eine weitere Vergleichsstufe dar, die die Plausibilität der Satellitensignale zueinander ermöglicht.

Das erfindungsgemäße System wird in vorteilhafter Weise dadurch weitergebildet, dass die Lokalisationseinheit derart ausgebildet ist, um mit Hilfe alternativer Ortungsverfahren eines Fahrzeugs eine korrigierte und plausibilisierte Eigenposition zu ermitteln. Diese alternativen Ortungsverfahren können beispielsweise mittels von Umfeldsensoren, wie beispielsweise Kamera, Radar, Lidar, Laserscanner, Ultraschall, insbesondere in Zusammenhang mit einem Umfeldmodell, durchgeführt werden. Des Weiteren ist es möglich, ein Ortungsverfahren mittels Positionsinformationen anderer Fahrzeuge oder Infrastruktureinheiten, die mit dem eigenen Fahrzeug kommunizieren, durchzuführen. Weitere Ortungsverfahren können mittels WLAN-Ortung oder Mobilfunkortung oder durch Daten der Odometriesensoren, wie beispielsweise Beschleunigungssensoren, Raddrehzahlsensoren, Gierratensensoren, Lenkwinkelsensoren, usw. durchgeführt werden.

Das erfindungsgemäße System wird in vorteilhafter Weise dadurch weitergebildet, dass die Lokalisationseinheit derart ausgebildet ist, um anhand vergangener plausibilisierter Eigenpositionen eine Bewegungstrajektorie zu erstellen und eine Unstetigkeit zwischen der aktuell ermittelten Eigenposition zu der Bewegungstrajektorie zu erkennen. Unter der Annahme, dass das Fahrzeug einen stetigen und kontinuierlichen Bewegungsablauf durchführt, sind unstetige Positionsinformationen auf einen Fehler von Satellitensignalen oder der Auswertung dieser Satellitensignale zurückzuführen. Hierzu kann es zunächst ausreichen nur die bereits zurückgelegte Bewegungstrajektorie heranzuziehen.

Das erfindungsgemäße System wird in vorteilhafter Weise dadurch weitergebildet, dass die Lokalisationseinheit derart ausgebildet ist, um mittels Odometriedaten, insbesondere Sensordaten von Raddrehzahlsensoren, Lenkwinkelsensoren, Inertialsensoren, die Bewegungstrajektorie in die Zukunft zu erweitern. Auf diese Weise werden die ermittelten und/oder plausibilisierten Eigenpositionen mit der Bewegungstrajektorie in der Vergangenheit und in der Zukunft weiter plausibilisiert.

Die Aufgabe wird ferner gelöst gemäß einem zweiten Aspekt der Erfindung mittels eines Verfahrens gemäß Anspruch 9.

Das erfindungsgemäße Verfahren ist dadurch weitergebildet, dass eine Lokalisationseinheit des Systems die mittels der Positionsermittlungseinheiten ermittelten Eigenpositionen aufnimmt und plausibilisierte Eigenpositionen ermittelt. Das Ermitteln plausibilisierter Eigenpositionen kann durch Zusammenführen, Auswählen, Korrigieren der vorliegenden Messwerte erfolgen.

Das erfindungsgemäße Verfahren ist dadurch weitergebildet, dass die ermittelten Eigenpositionen der Positionsermittlungseinheiten miteinander verglichen werden und Abweichungen zwischen den Eigenpositionen mittels der Lokalisationseinheit ermittelt werden.

Das erfindungsgemäße Verfahren wird in vorteilhafter Weise dadurch weitergebildet, dass die Lokalisationseinheit die ermittelten Eigenpositionen der Positionsermittlungseinheiten miteinander vergleicht und beim Überschreiten der Abweichung über einen Schwellenwert eine Korrektur der Eigenposition durchführt oder die ermittelte Eigenposition verwirft. Zur Definition des Schwellenwertes sei auf die vorangegangene Ausführung verwiesen.

Weitere vorteilhafte Ausführungsformen des erfindungsgemäßen Verfahrens ergeben sich im Zusammenhang mit den Ausführungsformen des erfindungsgemäßen Systems.

Die Erfindung wird nachfolgend anhand eines Ausführungsbeispiels und anhand von Figuren näher beschrieben. Es zeigen:
Figur 1 eine schematische Darstellung eines Anwendungsfalles des erfindungsgemäßen Systems, und
Figur 2 ein Blockschaltbild eines Ausführungsbeispiels des erfindungsgemäßen Systems.

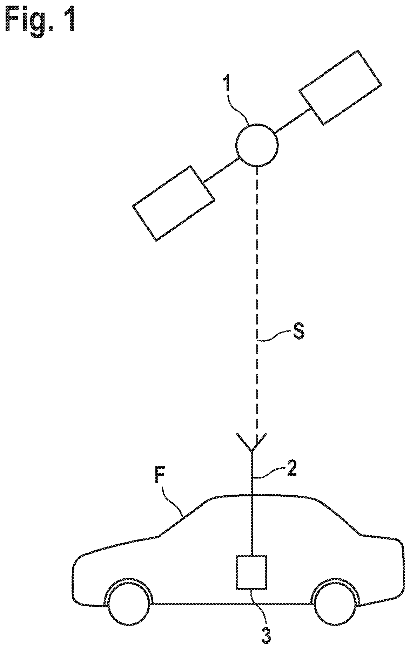

Figur 1 zeigt ein Fahrzeug F mit einem erfindungsgemäßen System 3 und einer Antenne 2 zum Empfangen von Satellitensignalen Seines globalen Satellitennavigationssystems. In Figur 1 ist ein Satellit 1 beispielhaft dargestellt. Zum Ermitteln der Eigenposition des Fahrzeugs F bedarf es mindestens vier Satelliten. Üblicherweise empfängt ein Fahrzeug in einem durchschnittlichen Sichtfeld Satellitensignale von mehr als vier Satelliten, sodass hier eine Redundanz der Satellitensignale vorliegt. Da mittels einer Analyseeinheit eine Trennung der Satellitensignale nach den Frequenzen der Satellitensignale eines Satelliten erfolgt, wie hiernach noch beschrieben, kann es für die nachfolgende Beschreibung offen bleiben, wie viele und welche Typen von Satellitensignalen empfangen werden. Satellitensignal S sei daher als die Summe aller empfangenen Satellitensignale verstanden.

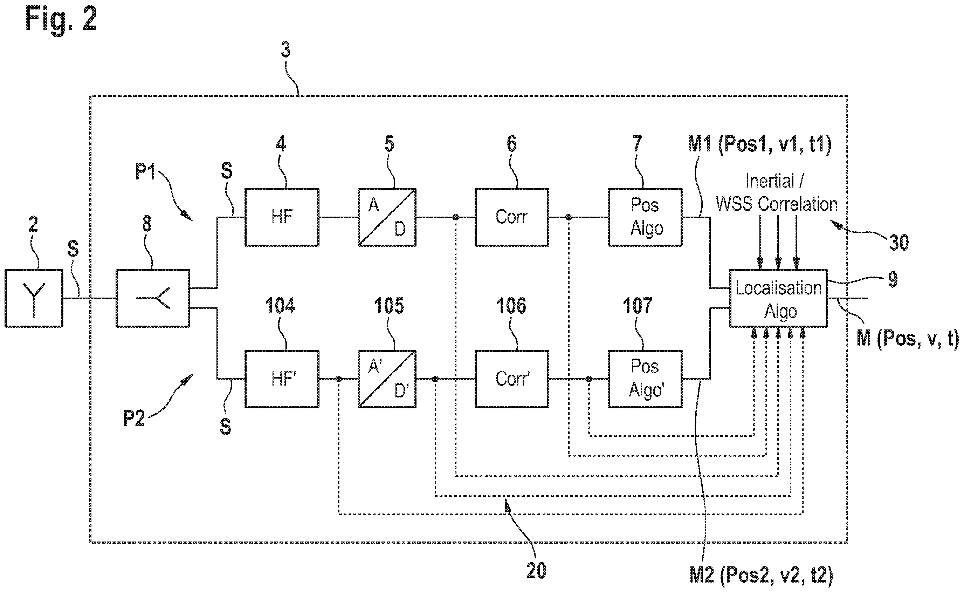

Die Antenne 2 zum Empfangen der Satellitensignale S ist aus dem Stand der Technik hinreichend bekannt. Die Antenne 2 ist mit dem erfindungsgemäßen System 3 verbunden und überträgt die empfangenen Satellitensignale S an das erfindungsgemäße System 3. Die Antenne 2 stellt in diesem Ausführungsbeispiel, wie auch in Figur 2 zu sehen, keinen Bestandteil des erfindungsgemäßen Systems 3 dar. Alternativ ist es jedoch auch denkbar die Antenne als Teil des Systems 3 auszulegen.

Figur 2 zeigt ein Blockschaltbild des erfindungsgemäßen Systems 3. Die von der Antenne 2 empfangenen Satellitensignale 2 werden am Eingang des erfindungsgemäßen Systems von einem Splitter 8 in die zwei Signalpfade P1, P2 aufgetrennt. Jeder Signalpfad P1, P2 umfasst eine Signalaufbereitungseinheit 4, 5, 104, 105 zum Aufbereiten empfangener Satellitensignale S, eine Analyseeinheit 6, 106 zum Analysieren der aufbereiteten Satellitensignale und eine Positionsermittlungseinheit 7, 107 zum Ermitteln von Messwerten M1, M2, umfassend eine Eigenposition Pos1, Pos2, Eigengeschwindigkeit v1, v2 und/oder eine Satellitenzeit t1, t2, mittels der von der Analyseeinheit 6, 106 bereitgestellten Satellitensignale S.

Die Signalaufbereitungseinheiten 4, 5, 104, 105 umfassen in diesem Ausführungsbeispiel jeweils ein Hochfrequenzteil 4, 104 bzw. einen Demodulator zum Demodulieren und Konditionieren der Satellitensignale S und einen Analog-Digital-Wandler 5, 105. Die Satellitensignale werden jeweils in dem Hochfrequenzteil 4, 104 zunächst so demoduliert und aufbereitet, dass der Analog-Digital-Wandler 5, 105 daraus ein digitales Satellitensignal erzeugen kann. Die digitalisierten Satellitensignale werden dann an die Analyseeinheiten 6, 106 bzw. Korrelationseinheit 6, 106 weitergeleitet.

Die Korrelationseinheit 6, 106 empfängt von dem Analog-Digital-Wandler 5, 105 Satellitensignale, die die gesamte Informationsbandbreite abbilden, d.h. die Satellitensignale von mehreren Satelliten auf mehreren Frequenzen von unterschiedlichen Satellitennavigationssystemen. Die Analyseeinheit 6, 106 trennt die Daten derart auf, dass die Satellitensignale den jeweiligen Satelliten, Frequenzen sowie den Satellitennavigationssystemen zugeordnet werden können und einzeln ausgewählt und weitergeleitet werden können. Es findet mittels der Analyseeinheit 6, 106 nun eine Auswahl der Satellitensignale statt, sodass die Positionsermittlungseinheiten 7, 107 in den unterschiedlichen Signalpfaden P1, P2 unabhängig voneinander die gleiche Position ermitteln können. Diese Auswahl kann anhand unterschiedlicher Kriterien erfolgen. Zum einen kann die verwendete Frequenz in den Satellitensignalen dazu genutzt werden, um der ersten Positionsermittlungseinheit 7 die Satellitensignale, die auf einer ersten Frequenz übermittelt wurden, zuzuweisen bzw. zu übermitteln, und der zweiten Positionsermittlungseinheit 107 die Satellitensignale, die auf einer zweiten Frequenz übermittelt wurden, zuzuordnen. Darüber hinaus ist es auch möglich, jedoch nicht durch die beanspruchte Erfindung umfasst, der ersten Positionsermittlungseinheit 7 Satellitensignale eines ersten Satellitennavigationssystemtyps, beispielsweise GPS, zuzuordnen und der zweiten Positionsermittlungseinheit 107 Satellitensignale eines zweiten Satellitennavigationstyps, z.B. Galileo, zuzuordnen. Es ist auch denkbar, beide Kriterien miteinander zu kombinieren. Idealerweise erfolgt die Trennung nach Frequenz dabei schon in den Signalaufbereitungseinheiten 4, 104 um Rechenleistung zu sparen. Soll das System jedoch flexibel bleiben, kann diese Unterscheidung auch erst in den Analyseeinheiten 6, 106 erfolgen.

Eine Trennung nach GNSS oder Navigationssystemtypen gemäß der nicht beanspruchten Ausführung ermöglicht es zu erkennen, wenn nur eines der Systeme fehlerhaft oder gestört ist, z.B. Selective Availability beim GPS, die eine künstlich verschlechterte Positionierung durch Satellitenseitig verschlechtere Signale darstellt.

Wird der Signalpfad nach Frequenzen getrennt, ist es möglich durch Vergleich der Messung aus einer ersten Frequenz zu einem ersten Satellit und einer zweiten Frequenz zu dem ersten Satellit Unterschiede zwischen beiden Signalpfaden P1, P2 zu erkennen z.B. verursacht durch Multipath, der auf unterschiedliche Frequenzen unterschiedlich wirkt. Es wird eine Bestimmung der Position in redundanten Signalpfaden getrennt voneinander vorgenommen, um die Gefahr von gemeinsamen Fehlern, sog. common causes zu minimieren. Hierbei wird der übertragene Dateninhalt des Satellitensignals, sog. Navigations Message, der in beiden Signalpfaden gleichwertig ist, wenn auch nicht identisch, verglichen, um Übertragungsfehler und simple fehlerhafte Daten zu erkennen. Das ist dadurch möglich, die Auswertung des Dateninhalts bzw. der Satellitensignale unterschiedlich bestimmt, gespeichert und übertragen wird. Jammer (HF Störer) wirken sich zudem meist nur auf eine Frequenz aus, oder zumindest unterschiedlich auf die unterschiedlichen Frequenzbänder. Spoofing Hardware die gezielt gefälscht GNSS Signale vortäuscht wird für eine zweite Frequenz deutlich aufwendiger, was die Wahrscheinlichkeit für eine Datenfälschung reduziert. Werden dabei ergänzend noch zwei unterschiedliche Antennen für die unterschiedlichen Frequenzpfade verwendet, steigt der Aufwand weiter. Zeitsynchrones Abspielen auf beide Antennen, die dann auch den jeweils korrekten Trajektorienverlauf darstellen, und gewisse Signalkorrelationen beinhalten, andere ausschließen, macht eine Signalfälschung mit vertretbarem Aufwand nahezu unmöglich.

Die Positionsermittlungseinheiten 7, 107 ermitteln voneinander unabhängig die Eigenposition anhand der von der Analyseeinheit 6, 106 übermittelten Satellitensignale. Idealerweise sollten die so ermittelten Messwerte miteinander übereinstimmen. Um dies zu überprüfen, werden die Ergebnisse bzw. die Messwerte der Positionsermittlungseinheiten 7, 107 in einer Lokalisationseinheit 9 zusammengeführt und ausgewertet.

Die Lokalisationseinheit vergleicht die von den Positionsermittlungseinheiten 7, 107 ermittelten Messwerte, d.h. Eigenposition. Eine Bewertung der Messwerte M1, M2 und deren Abweichung zueinander kann mittels Schwellenwerte erfolgen. Beispielsweise wird ein Schwellenwert für eine maximale Abweichung zwischen den Eigenpositionen Pos1, Pos2 der Signalpfade P1, P2 vordefiniert, die nicht überschritten werden darf. Der Wert kann beispielsweise im Bereich von 3m bis 5m liegen oder bevorzugter Weise 4m, besonders bevorzugter Weise 4,10m betragen. Liegt beispielsweise eine Abweichung zwischen der Eigenposition, die von der ersten Positionsermittlungseinheit 4 ermittelt wurde, zu der Eigenposition, die von der zweiten Positionsermittlungs-einheit 104 ermittelt wurde, vor, so ist davon auszugehen, dass ein Teil der Satellitensignale fehlerhaft ist. Dies kann beispielsweise darauf zurückzuführen sein, dass bestimmte Fehler wie Multipath oder Verfälschungen durch Jammer oder Spoofer auf bestimmte Frequenzen einen stärkeren Einfluss haben als auf andere Frequenzen. Durch die Redundanz und Unabhängigkeit der Signalpfade kann jedoch ausgeschlossen werden, dass gemeinsame Fehler dazu führen, dass sich ein gleicher Fehlertyp auf beide Teile der Satellitensignale bzw. Signalpfade P1, P2 auswirkt.

Die Lokalisierungseinheit 9 ist des Weiteren mit Odometriesensoren, insbesondere Raddrehzahlsensoren, Lenkwinkelsensoren und/oder Beschleunigungssensoren verbunden. Anhand der Daten der Odometriesensoren 30 können weitere Plausibilisierungen der Eigenposition durchgeführt werden. Die Lokalisierungseinheit 9 kann darüber hinaus mit weiteren Ortungsverfahren anderer Systeme verknüpft werden, wie beispielsweise Umfeldsensoren, Positionsermittlungen durch Daten von anderen Fahrzeugen oder Infrastruktureinheiten, WLAN-Ortung, Mobilfunkortung usw. Mittels dieser weiteren Ortungsverfahren kann ein weiteres Plausibilisieren, die unabhängig von Satellitensignalen ist, durchgeführt werden.

Die Lokalisierungseinheit ist darüber hinaus mit den Signalpfaden P1, P2 derart verbunden, dass die Satellitensignale, die von den Analog-Digital-Wandlern 5, 105 oder Analyseeinheiten 6, 106 verarbeitet werden, von der Lokalisierungseinheit 9 abgegriffen werden können. Auf diese Weise können stufenweise Vergleiche der weiter verarbeiteten Satellitensignale durchgeführt werden, um frühzeitig einen Fehler in den Satellitensignalen festzustellen.

Werden Die Ausgangssignale des A/D Wandlers 5, 105 in der Lokalisierungseinheit 9 verglichen 20, können bereits früh Annomalien erkannt werden, die auf eine Signaländerung des Primärpfads zum Sekundärpfad beruhen. Durch die Analyse der Satellitensignale S innerhalb der Analyseeinheit 6, 106 besteht ferner die Möglichkeit die Satteliteninformationen zu analysieren um gestörte Signale von der anschließenden Positionsbestimmung in der Lokalisierungseinheit zu entfernen. Alternativ ist es jedoch auch möglich einen Vergleich nicht innerhalb der Lokalisierungseinheit 9, sondern in den Positionsermittlungseinheiten 7, 107 durchzuführen.

In der Lokalisationseinheit 9 kann eine weitere Plausibilisierung der Messwerte M1, M2 derart erfolgen, dass anhand vergangener plausibilisierter Eigenpositionen eine Bewegungstrajektorie erstellt wird und eine Unstetigkeit zwischen der aktuell ermittelten Eigenposition zu der Bewegungstrajektorie zu erkennen. Mittels Odomoteriedaten, insbesondere Sensordaten von Raddrehzahlsensor, Lenkwinkelsensor, Inertialsensor, kann die Bewegungstrajektorie um Trajektorienabschnitte in die Zukunft erweitert werden.

Die Lokalisierungseinheit 9 ist mit einem Ausgang ausgestattet, über den dann die plausibilisierten Messwerte M, d.h. Eigenposition P, Eigengeschwindigkeit v und / oder Satellitenzeit t, ausgegeben werden und weiteren Systemen innerhalb eines Fahrzeugs F bereitgestellt werden.

Das erfindungsgemäße System 4 kann als eine elektronische Baukomponente, eine oder mehrere integrierte Schaltungen oder als ein Chip ausgebildet sein, das ein Verfahren gemäß dem Anspruch 9 zum Ermitteln einer plausibilisierten Eigenposition durchführt.

## Patentansprüche

1. System (3) zum Empfangen und Verarbeiten von Satellitensignalen von Satelliten globaler Navigationssysteme, insbesondere für ein Fahrzeug (F), mit zwei voneinander getrennten Signalpfaden (P1, P2) aufweisend
- eine Signalaufbereitungseinheit (4, 5, 104, 105) zum Aufbereiten empfangener Satellitensignale,
- eine Analyseeinheit (6, 106) zum Analysieren der aufbereiteten Satellitensignale, und
- eine Positionsermittlungseinheit (7, 107) zum Ermitteln einer Eigenposition (Pos1, Pos2), mittels der von der Analyseeinheit (6, 106) bereitgestellten Satellitensignale (S),
**dadurch gekennzeichnet, dass** die Analyseeinheiten (6, 106) oder die Signalaufbereitungseinheiten (4, 5, 104, 105) der zwei voneinander getrennten Signalpfade (P1, P2) dazu ausgebildet sind, eine Trennung der Satellitensignale nach den Frequenzen der Satellitensignale eines Satelliten durchzuführen und den Positionsermittlungseinheiten bereitzustellen, wobei die den Positionsermittlungseinheiten bereitgestellten und nach den Frequenzen der Satellitensignale des Satelliten getrennten Satellitensignale bezüglich ihres Informationsgehalts unabhängige Satellitensignale sind, wobei das System ferner eine Lokalisationseinheit (9) zum Aufnehmen der mittels der Positionsermittlungseinheiten (7, 107) ermittelten Eigenpositionen und Ermitteln von plausibilisierten Eigenpositionen aufweist, und wobei die Lokalisationseinheit ausgebildet ist, die ermittelten Eigenpositionen der Positionsermittlungseinheiten miteinander zu vergleichen und Abweichungen zwischen den Eigenpositionen zu ermitteln.

2. System nach Anspruch 1, wobei die Lokalisationseinheit derart ausgebildet ist, um die ermittelten Eigenpositionen der Positionsermittlungseinheiten miteinander zu vergleichen und beim Überschreiten der Abweichung über einen Schwellenwert eine Korrektur der Eigenposition durchzuführen oder die ermittelte Eigenposition zu verwerfen.

3. System nach dem vorstehenden Anspruch, wobei der Schwellenwert in einem Bereich von 3m bis 5m liegt, bevorzugter Weise 4m beträgt, besonders bevorzugt 4,10m beträgt.

4. System nach zumindest einem der vorstehenden Ansprüche, wobei die Lokalisationseinheit derart ausgebildet ist, um die von der Signalaufbereitungseinheit (4, 5, 104, 105) aufbereiteten Satellitensignale des ersten Signalpfades mit dem des zweiten Signalpfades zu vergleichen.

5. System nach zumindest einem der vorstehenden Ansprüche, wobei die Lokalisationseinheit derart ausgebildet ist, um die von der Analyseeinheit (6, 106) aufbereiteten Satellitensignale des ersten Signalpfades mit dem des zweiten Signalpfades zu vergleichen (20).

6. System nach zumindest einem der vorstehenden Ansprüche, wobei die Lokalisationseinheit derart ausgebildet ist, um mithilfe alternativer Ortungsverfahren eines Fahrzeugs eine korrigierte und plausibilisierte Eigenposition zu ermitteln.

7. System nach einem der vorstehenden Ansprüche, wobei die Lokalisationseinheit derart ausgebildet ist, um anhand vergangener plausibilisierter Eigenpositionen eine Bewegungstrajektorie zu erstellen und eine Unstetigkeit zwischen der aktuell ermittelten Eigenposition zu der Bewegungstrajektorie zu erkennen.

8. System nach dem vorstehenden Anspruch, wobei die Lokalisationseinheit derart ausgebildet ist, um mittels Odomoteriedaten (30), insbesondere Sensordaten von Raddrehzahlsensor, Lenkwinkelsensor, Inertialsensor, die Bewegungstrajektorie in die Zukunft zu erweitern.

9. Verfahren zum Ermitteln einer plausibilisierten Eigenposition mittels eines System (3) zum Empfangen und Verarbeiten von Satellitensignalen (S) globaler Navigationssysteme, insbesondere für ein Fahrzeug, mit zwei voneinander getrennten Signalpfaden (P1, P2), jeweils aufweisend eine Signalaufbereitungseinheit (4, 5, 104, 105) zum Aufbereiten empfangener Satellitensignale, eine Analyseeinheit (6, 106) zum Analysieren der aufbereiteten Satellitensignale, und eine Positionsermittlungseinheit (7, 107) zum Ermitteln einer Eigenposition (Pos1, Pos2), mittels der von der Analyseeinheit (6, 106) bereitgestellten Satellitensignalen (S), aufweisend die Schritte:
- Empfangen der Satellitensignale (S),
- Verteilen der Satellitensignale (S) auf jeden Signalpfad (P1, P2),
- Aufbereiten der Satellitensignale (S) mittels der Signalaufbereitungseinheiten (4, 5, 104, 105),
- Analysieren der aufbereiteten Satellitensignale mittels der Analyseeinheiten (6, 106),
**dadurch gekennzeichnet, dass** die Satellitensignale nach den Frequenzen der Satellitensignale eines Satelliten voneinander getrennt und den Positionsermittlungseinheiten (7, 107) bereitgestellt werden, wobei die den Positionsermittlungseinheiten bereitgestellten und nach den Frequenzen der Satellitensignale des Satelliten getrennten Satellitensignale bezüglich ihres Informationsgehalts unabhängige Satellitensignale sind, wobei durch eine Lokalisationseinheit (9) die mittels der Positionsermittlungseinheiten (7, 107) ermittelten Eigenpositionen aufgenommen und plausibilisierte Eigenpositionen ermittelt werden, und wobei durch die Lokalisationseinheit die ermittelten Eigenpositionen der Positionsermittlungseinheiten miteinander verglichen und Abweichungen zwischen den Eigenpositionen ermittelt werden.

10. Verfahren nach Anspruch 9, wobei die Lokalisationseinheit die ermittelten Eigenpositionen der Positionsermittlungseinheiten miteinander vergleicht und beim Überschreiten der Abweichung über einen Schwellenwert eine Korrektur der Eigenposition durchführt oder die ermittelte Eigenposition verwirft.

## Claims

1. System (3) for receiving and processing satellite signals from satellites of global navigation systems, in particular for a vehicle (F), having two signal paths (P1, P2) which are separate from one another, having
- a signal conditioning unit (4, 5, 104, 105) for conditioning received satellite signals,
- an analysis unit (6, 106) for analysing the conditioned satellite signals, and
- a position determination unit (7, 107) for determining an ego position (Pos1, Pos2) by means of the satellite signals (S) provided by the analysis unit (6, 106),
**characterized in that** the analysis units (6, 106) or the signal conditioning units (4, 5, 104, 105) of the two signal paths (P1, P2) which are separate from one another are designed to separate the satellite signals according to the frequencies of the satellite signals from a satellite and to provide the position determination units with said satellite signals, wherein the satellite signals made available to the position determination units and separated according to the frequencies of the satellite signals from the satellite are independent satellite signals in terms of their information content, wherein the system also has a localization unit (9) for receiving the ego positions determined by means of the position determination units (7, 107) and for determining ego positions whose plausibility has been checked, and wherein the localization unit is designed to compare the determined ego positions from the position determination units with one another and to determine differences between the ego positions.

2. System according to Claim 1, wherein the localization unit is designed to compare the determined ego positions from the position determination units with one another and to correct the ego position or to reject the determined ego position if the difference exceeds a threshold value.

3. System according to the preceding claim, wherein the threshold value is in a range of 3 m to 5 m, is preferably 4 m, particularly preferably 4.10 m.

4. System according to at least one of the preceding claims, wherein the localization unit is designed to compare the satellite signals in the first signal path which are conditioned by the signal conditioning unit (4, 5, 104, 105) with the satellite signal in the second signal path.

5. System according to at least one of the preceding claims, wherein the localization unit is designed to compare (20) the satellite signals in the first signal path which are conditioned by the analysis unit (6, 106) with the satellite signal in the second signal path.

6. System according to at least one of the preceding claims, wherein the localization unit is designed to determine a corrected ego position whose plausibility has been checked with the aid of alternative locating methods for a vehicle.

7. System according to one of the preceding claims, wherein the localization unit is designed to create a movement trajectory on the basis of past ego positions whose plausibility has been checked and to identify a discontinuity between the currently determined ego position and the movement trajectory.

8. System according to the preceding claim, wherein the localization unit is designed to extend the movement trajectory into the future by means of odometry data (30), in particular sensor data from a wheel speed sensor, a steering angle sensor or an inertial sensor.

9. Method for determining an ego position whose plausibility has been checked by means of a system (3) for receiving and processing satellite signals (S) from global navigation systems, in particular for a vehicle, having two signal paths (P1, P2) which are separate from one another, each having a signal conditioning unit (4, 5, 104, 105) for conditioning received satellite signals, an analysis unit (6, 106) for analysing the conditioned satellite signals, and a position determination unit (7, 107) for determining an ego position (Pos1, Pos2) by means of the satellite signals (S) provided by the analysis unit (6, 106), having the steps of:
- receiving the satellite signals (S),
- distributing the satellite signals (S) to each signal path (P1, P2),
- conditioning the satellite signals (S) by means of the signal conditioning units (4, 5, 104, 105),
- analysing the conditioned satellite signals by means of the analysis units (6, 106),
**characterized in that** the satellite signals are separated from one another according to the frequencies of the satellite signals from a satellite and are made available to the position determination units (7, 107), wherein the satellite signals made available to the position determination units and separated according to the frequencies of the satellite signals from the satellite are independent satellite signals in terms of their information content, wherein a localization unit (9) receives the ego positions determined by means of the position determination units (7, 107) and determines ego positions whose plausibility has been checked, and wherein the localization unit compares the determined ego positions from the position determination units with one another and determines differences between the ego positions.

10. Method according to Claim 9, wherein the localization unit compares the determined ego positions from the position determination units with one another and corrects the ego position or rejects the determined ego position if the difference exceeds a threshold value.

## Revendications

1. Système (3) permettant de recevoir et de traiter des signaux satellites provenant des satellites de systèmes mondiaux de navigation, en particulier pour un véhicule (F), comprenant deux trajets de signal (P1, P2) séparés l'un de l'autre, présentant
- une unité de mise en forme de signal (4, 5, 104, 105) pour mettre en forme des signaux satellites reçus,
- une unité d'analyse (6, 106) pour analyser les signaux satellites mis en forme, et
- une unité de détermination de position (7, 107) pour déterminer une position propre (Pos1, Pos2) au moyen des signaux satellites (S) fournis par l'unité d'analyse (6, 106),
**caractérisé en ce que** les unités d'analyse (6, 106) ou les unités de mise en forme de signal (4, 5, 104, 105) des deux trajets de signal (P1, P2) séparés l'un de l'autre sont réalisées pour effectuer une séparation des signaux satellites selon les fréquences des signaux satellites d'un satellite, et pour les fournir aux unités de détermination de position, dans lequel les signaux satellites fournis aux unités de détermination de position et séparés selon les fréquences des signaux satellites du satellite sont des signaux satellites indépendants quant à leur contenu d'information, dans lequel le système présente en outre une unité de localisation (9) pour enregistrer les positions propres déterminées au moyen des unités de détermination de position (7, 107) et pour déterminer des positions propres corroborées, et dans lequel l'unité de localisation est réalisée pour comparer les positions propres déterminées des unités de détermination de position entre elles et pour déterminer des écarts entre les positions propres.

2. Système selon la revendication 1, dans lequel l'unité de localisation est réalisée pour comparer les positions propres déterminées des unités de détermination de position entre elles, et si l'écart dépasse une valeur seuil, pour effectuer une correction de la position propre ou pour rejeter la position propre déterminée.

3. Système selon la revendication précédente, dans lequel la valeur seuil se situe dans une plage de 3 m à 5 m, étant de préférence égale à 4 m, de manière particulièrement préférée égale à 4,10 m.

4. Système selon au moins l'une des revendications précédentes, dans lequel l'unité de localisation est réalisée pour comparer les signaux satellites mis en forme par l'unité de mise en forme de signal (4, 5, 104, 105) du premier trajet de signal avec celui du deuxième trajet de signal.

5. Système selon au moins l'une des revendications précédentes, dans lequel l'unité de localisation est réalisée pour comparer (20) les signaux satellites mis en forme par l'unité d'analyse (6, 106) du premier trajet de signal avec celui du deuxième trajet de signal.

6. Système selon au moins l'une des revendications précédentes, dans lequel l'unité de localisation est réalisée pour déterminer à l'aide de procédés de localisation alternatifs d'un véhicule une position propre corrigée et corroborée.

7. Système selon l'une quelconque des revendications précédentes, dans lequel l'unité de localisation est réalisée pour créer une trajectoire de déplacement à l'aide de positions propres corroborées antérieures, et pour identifier une discontinuité entre la position propre actuellement déterminée et la trajectoire de déplacement.

8. Système selon la revendication précédente, dans lequel l'unité de localisation est réalisée pour étendre la trajectoire de déplacement dans le futur au moyen de données odométriques (30), en particulier de données de capteur d'un capteur de vitesse de rotation de roue, d'un capteur d'angle de braquage, d'un capteur inertiel.

9. Procédé permettant de déterminer une position propre corroborée au moyen d'un système (3) permettant de recevoir et de traiter des signaux satellites (S) de systèmes mondiaux de navigation, en particulier pour un véhicule, comprenant deux trajets de signal (P1, P2) séparés l'un de l'autre, présentant respectivement une unité de mise en forme de signal (4, 5, 104, 105) pour mettre en forme des signaux satellites reçus, une unité d'analyse (6, 106) pour analyser les signaux satellites mis en forme, et une unité de détermination de position (7, 107) pour déterminer une position propre (Pos1, Pos2) au moyen des signaux satellites (S) fournis par l'unité d'analyse (6, 106), présentant les étapes consistant à :
- recevoir les signaux satellites (S),
- répartir les signaux satellites (S) sur chaque trajet de signal (P1, P2),
- mettre en forme les signaux satellites (S) au moyen des unités de mise en forme de signal (4, 5, 104, 105),
- analyser les signaux satellites mis en forme au moyen des unités d'analyse (6, 106),
**caractérisé en ce que** les signaux satellites sont séparés les uns des autres selon les fréquences des signaux satellites d'un satellite et sont fournis aux unités de détermination de position (7, 107), dans lequel les signaux satellites fournis aux unités de détermination de position et séparés selon les fréquences des signaux satellites du satellite sont des signaux satellites indépendants quant à leur contenu d'information, dans lequel une unité de localisation (9) enregistre les positions propres déterminées au moyen des unités de détermination de position (7, 107) et détermine des positions propres corroborées, et dans lequel l'unité de localisation compare les positions propres déterminées des unités de détermination de position entre elles et détermine des écarts entre les positions propres.

10. Procédé selon la revendication 9, dans lequel l'unité de localisation compare les positions propres déterminées des unités de détermination de position entre elles, et si l'écart dépasse une valeur seuil, effectue une correction de la position propre ou rejette la position propre déterminée.
